# EUROPEAN PATENT APPLICATION

(11) **EP 4 625 901 A1**
(43) Date of publication of application: **01.10.2025**
(21) Application number: 22966042.8
(22) Date of filing: 21.11.2022
(51) Int. Cl.: H04L 27/00

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2022/133271
(87) International publication number: WO 2024/108340

(57) **Abstract**

Embodiments of the present disclosure relate to the technical field of mobile communications, and provide a communication method, an electronic device, and a storage medium. The communication method is applied to an access point multi-link device (AP MLD). The method comprises: determining a first radio frame, wherein the first radio frame comprises a first identifier, the first identifier indicates a target link which a broadcast target wake-up time period parameter Broadcast TWT Parameter Set field in the first radio frame applies, and the target link comprises one or more links between the AP MLD and a multi-link station device non-AP MLD; and sending the first radio frame. The embodiments of the present disclosure provide an R-TWT implementation mode, so as to improve an R-TWT mechanism.

## Description

### TECHNICAL FIELD

The embodiments of the present disclosure relate to the field of mobile communication technology. Specifically, the embodiments of the present disclosure relate to a communication method, an electronic device, and a storage medium.

### BACKGROUND

In the Wi-Fi technology currently being studied, a Target Wake Time (TWT) mechanism is proposed to further reduce the power consumption of Wi-Fi networks and support energy-saving operations for large-scale Internet of Things (IoT) devices. At the same time, in order to ensure the transmission of Latency Sensitive Traffic, a Restricted-Target Wake Time (R-TWT) mechanism is proposed. Therefore, it is necessary to provide an implementation method for R-TWT to improve the R-TWT mechanism.

### SUMMARY

The embodiments of the present disclosure provide a communication method, an electronic device, and a storage medium to offer an implementation method for R-TWT.

In an aspect, the embodiments of the present disclosure provide a communication method, which is applied to an Access Point Multi-Link Device (AP MLD) and includes:
determining a first frame, where the first frame includes a first identification, the first identification indicates the link to which the Broadcast Target Wake Time (TWT) Parameter Set field in the first frame is applied, and the link includes one or more links between the AP MLD and a non-Access Point Multi-Link Device (non-AP MLD); and
sending the first frame.

In another aspect, the embodiments of the present disclosure further provide a communication method, which is applied to a non-Access Point Multi-Link Device (non-AP MLD) and includes:
receiving a first frame, where the first frame includes a first identification, the first identification indicates the link to which the Broadcast Target Wake Time (TWT) Parameter Set field in the first frame is applied, and the link includes one or more links between an Access Point Multi-Link Device (AP MLD) and the non-AP MLD.

In another aspect, the embodiments of the present disclosure further provide an electronic device, which is an Access Point Multi-Link Device (AP MLD) and includes:
a determining module, configured to determine a first frame, where the first frame includes a first identification, the first identification indicates the link to which the Broadcast Target Wake Time (TWT) Parameter Set field in the first frame is applied, and the link includes one or more links between the AP MLD and the non-Access Point Multi-Link Device (non-AP MLD); and
a sending module, configured to send the first frame.

In another aspect, the embodiments of the present disclosure further provide an electronic device, which is a non-Access Point Multi-Link Device (non-AP MLD) and includes:
a receiving module, configured to receive a first frame, where the first frame includes a first identification, the first identification indicates the link to which the Broadcast Target Wake Time (TWT) Parameter Set field in the first frame is applied, and the link includes one or more links between an Access Point Multi-Link Device (AP MLD) and the non-AP MLD.

The embodiments of the present disclosure further provide an electronic device, including a memory, a processor, and a computer program stored in the memory and executable on the processor. When the processor executes the program, one or more communication methods described in the embodiments of the present disclosure are implemented.

The embodiments of the present disclosure further provide a computer-readable storage medium, on which a computer program is stored. When the computer program is executed by a processor, one or more communication methods described in the embodiment of the present disclosure are implemented.

In the embodiments of the present disclosure, the AP MLD determines and sends a first frame, carries a first identification bit in the first frame, and indicates the link to which the Broadcast TWT Parameter Set field in the first frame is applied through the first identification. Besides, the link includes one or more links between the AP MLD and the non-AP MLD, so as to implement the TWT negotiation mechanism under a plurality of links, improve the spectrum utilization efficiency, and reduce the energy consumption of the terminal device. Also, the existing R-TWT schedule can be applied to other links, so as to avoid other links from negotiating to establish a new R-TWT schedule when transmitting low-latency services and causing a delay in the transmission of low-latency services.

Additional aspects and advantages of the embodiments of the present disclosure will be partially given in the following description, which will become obvious from the following description or be understood through the practice of the present disclosure.

### BRIEF DESCRIPTION OF THE DRAWINGS

In order to more clearly illustrate the technical solution of the embodiments of the present disclosure, the following will briefly introduce the drawings required for use in the description of the embodiments of the present disclosure. It shall be noted that the drawings in the following description are only some embodiments of the present disclosure. For those of ordinary skills in the art, other drawings can be obtained based on these drawings without creative efforts.
Fig. 1 is one of the flow charts for the communication method provided by an embodiment of the present disclosure;
Fig. 2 is one of the schematic diagrams for a first example of an embodiment of the present disclosure;
Fig. 3 is another one of the schematic diagrams for a first example of an embodiment of the present disclosure;
Fig. 4 is another one of the flow charts for the communication method provided by an embodiment of the present disclosure;
Fig. 5 is one of the structural schematic diagrams for the electronic device provided by an embodiment of the present disclosure;
Fig. 6 is another one of the structural schematic diagrams for the electronic device provided by an embodiment of the present disclosure; and
Fig. 7 is still another one of the structural schematic diagrams for the electronic device provided by an embodiment of the present disclosure.

### DETAILED DESCRIPTION OF THE EMBODIMENTS

Here, example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all the embodiments consistent with the present disclosure. Instead, they are only examples of devices and methods consistent with some aspects of the present disclosure as detailed in the appended claims.

In the embodiments of the present disclosure, the terms used are only for the purpose of describing specific embodiments and are not intended to limit the present disclosure. The singular forms "one", "said", and "the" used in the present disclosure and the appended claims are also intended to include plural forms unless the context clearly indicates otherwise. It should also be understood that the term "and/or" used herein refers to and includes any or all possible combinations of one or more associated items as listed. For example, A and/or B may mean that A exists alone, A and B exist at the same time, and B exists alone. The character "/" generally indicates that the objects associated before and after such character are in an "or" relationship. The term "multiple" means two or more. In view of above, "multiple" may also be understood as "at least two" in the embodiments of the present disclosure.

It should be understood that although the terms first, second, third, etc. may be used in the present disclosure to describe various information, these information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at" or "when" or "in response to".

The technical scheme in the embodiments of the present disclosure will be clearly and completely described below in conjunction with the drawings in the embodiments of the present disclosure. It shall be noted that the described embodiments are only part of the embodiments of the present disclosure, not all of them. Based on the embodiments in the present disclosure, all other embodiments obtained by those of ordinary skills in the art without creative work are within the scope of protection of the present disclosure.

The embodiments of the present disclosure provide a communication method, an electronic device, and a storage medium to provide an implementation method for R-TWT (Restricted TWT).

The method and the device are based on the same application concept. Since the principles of solving the problem by the method and the device are similar, the implementations of the device and the method can refer to each other, and no repetition will be given here.

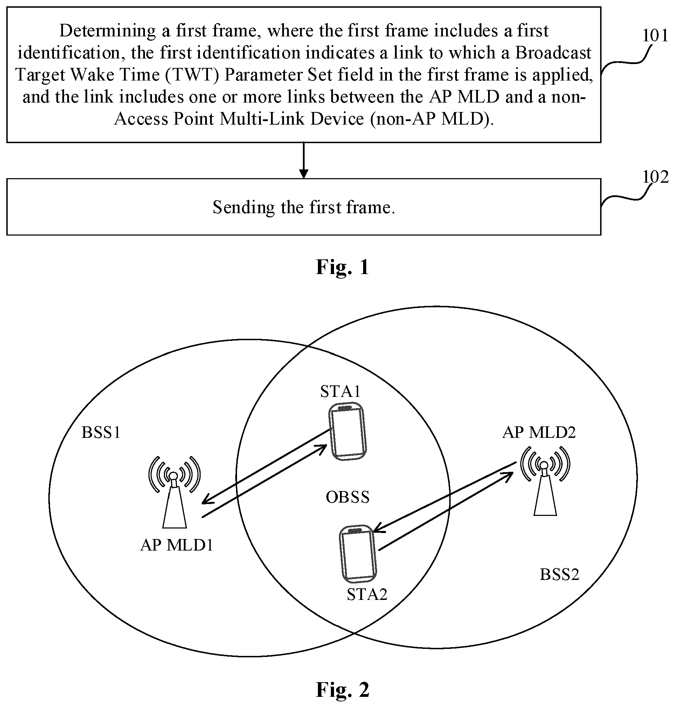

As shown in Fig. 1, an embodiment of the present disclosure provides a communication method. In an embodiment, the communication method may be applied to an Access Point (AP) device. In an embodiment of the present disclosure, the AP is, for example, a device having a wireless to wired bridging function, and the AP is responsible for extending the services provided by the wired network to the wireless network. The station (STA) is, for example, an electronic device having a wireless network access function, and provides a Frame Delivery service to allow information to be transmitted.

The communication method may include the following steps 101 and 102.

In step 101, a first frame is determined. The first frame includes a first identification, the first identification indicates a link to which a Broadcast Target Wake Time (TWT) Parameter Set field in the first frame is applied, and the link includes one or more links between the Access Point Multi-Link Device (AP MLD) and a non-Access Point Multi-Link Device (non-AP MLD).

In a wireless Local Area Network, a Basic Service Set (BSS) may be composed of an AP and one or more stations (STA) communicating with the AP. A Basic Service Set may be connected to a Distribution System (DS) through the corresponding AP, and then connected to another Basic Service Set to form an Extended Service Set (ESS). As a first example, referring to Fig. 2, AP1 and STA1 form BSS1, and AP2 and STA2 form BSS2. If the coverages of two or more BSSs overlap, an Overlapping Basic Service Set (OBSS) is formed. As shown in Fig. 2, BSS1 and BSS2 overlap to form OBSS.

In an embodiment of the present disclosure, AP and STA may be devices supporting multiple links. For example, they may be represented as AP MLD and non-AP MLD, respectively. AP MLD may represent an Access Point supporting multi-link communication functions, and non-AP MLD may represent a station supporting multi-link communication functions.

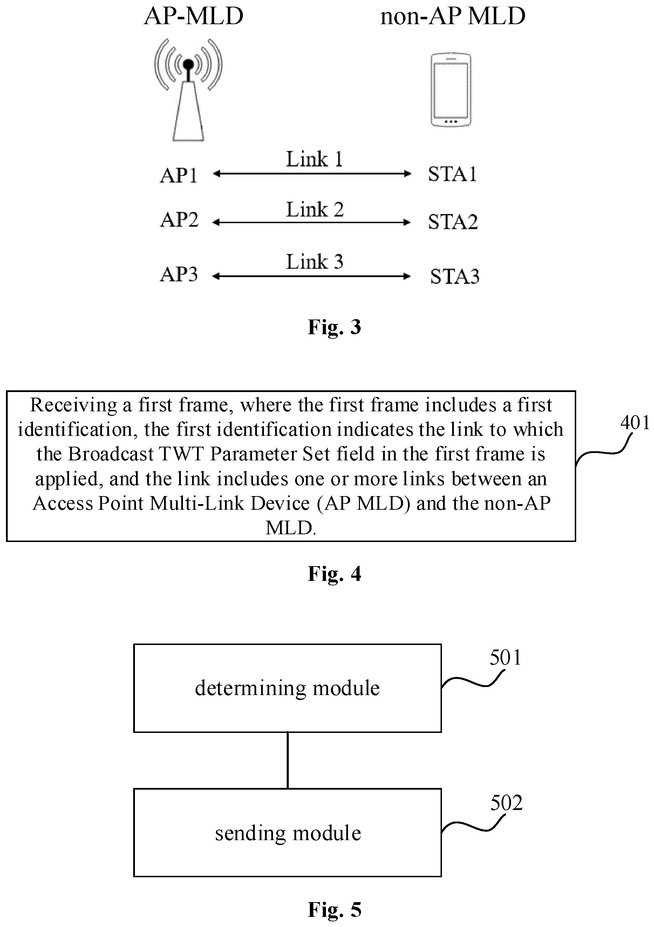

With reference to Fig. 3, the AP MLD may include three subordinate APs, such as AP1, AP2, and AP3 as shown in Fig. 3. Each AP may work in Link 1, Link 2, and Link 3 respectively. The non-AP MLD may also include three subordinate STAs, such as STA1, STA2, and STA3 as shown in Fig. 2. STA1 works in Link 1, STA2 works in Link 2, and STA3 works in Link 3.

For the ease of description, the following mainly describes an example in which an AP communicates with a STA under multiple links. However, the example embodiments of the present disclosure are not limited thereto. In the example of Fig. 3, it is assumed that AP1 communicates with STA1 through the corresponding first Link 1. Similarly, AP2 communicates with STA2 through the corresponding second Link 2, and AP communicates with STA3 through the third Link 3. In addition, Link 1 to Link 3 may be multiple links at different frequencies, for example, links at 2.4 GHz, 5 GHz, and 6 GHz, or several links of the same or different bandwidths at 2.4 GHz. In addition, multiple channels may exist under each link. It is understood that the communication scenario shown in Fig. 2 is only an example, and the concept of the present disclosure is not limited thereto. For example, the AP MLD may be connected to multiple (three) non-AP MLDs, or under each link, an AP may communicate with multiple other types of stations.

TWT is a technology for energy saving, which aims to further reduce the power consumption of Wi-Fi networks. Specifically, TWT technology determines the sleep and wake time and frequency of STA by enabling STA and AP to negotiate the Service Period (SP). STA remains active and communicates during the Service Period, so that it can sleep outside the Service Period to achieve the purpose of energy saving. In addition, TWT technology may also enable AP to provide higher quality services to multiple STAs, minimize competition or overlap, and improve spectrum efficiency while reducing the power consumption of Wi-Fi networks.

In order to further ensure the communication of low-latency services, a Restricted Target Wake Time (R-TWT) is proposed based on the TWT technology. R-TWT is used to serve low-latency services. In the R-TWT SP, other non-low-latency services cannot communicate during such period, thereby ensuring the transmission of low-latency services.

In an embodiment of the present disclosure, the AP MLD determines a first frame. In an embodiment, the first frame includes at least one of a Beacon frame, a Probe Response frame, and an Association Response frame. The first frame carries a Broadcast TWT Parameter Set field. As a second example, the format of the Broadcast TWT Parameter Set field is shown in the following Table 1:

**Table 1**

| Info Content | Request Type | Target Wake Time | Nominal Minimum TWT Wake Duration | TWT Wake Interval Mantissa | Broadcast TWT Info | Restricted-TWT Traffic Info |
|---|---|---|---|---|---|---|
| Octets | 2 | 2 | 1 | 2 | 2 | 0 or 3 |

As shown in Table 1, the Broadcast TWT Parameter Set field includes Request Type, Target Wake Time, Restricted TWT traffic information, and the like.

The first frame also carries a first identification, which indicates the link to which the Broadcast TWT Parameter Set field is applied. The link includes one or more links between the AP MLD and the non-AP MLD. For example, a Link ID Bitmap subfield may be added to the first frame, and the Link ID Bitmap subfield carries the first identification. If the i-th bit in the Link ID Bitmap ID subfield is set to 1, it indicates that the link to which the R-TWT parameter Set parameter is applied includes the link associated with the i-th bit. In this way, the first identification may indicate whether one or more links between the AP MLD and the non-AP MLD are applicable to the parameters in the Broadcast TWT Parameter Set field.

In step 102, the first frame is sent.

The AP MLD sends the first frame, so that the R-TWT schedule corresponding to the Broadcast TWT Parameter Set field can be applied to one or more links with the non-AP MLD. Specifically, the AP MLD is used as one or more R-TWT schedules between schedule AP and non-AP MLD and only established on the single link between the two. Therefore, the one or more R-TWT schedules are only used for low-latency services on the single link, and cannot be applied to other links between the same AP MLD and non-AP MLD. Thus, if there are low-latency services on other links, it is necessary to negotiate and establish a new R-TWT schedule on the link, resulting in a delay in the transmission of low-latency services and occupying network resources. In an embodiment of the present disclosure, the first identification bit is carried in the first frame to implement the application of the existing R-TWT schedule to other links, avoiding the need for other links to negotiate and establish a new R-TWT schedule when transmitting low-latency services.

It can be understood that in the embodiments of the present disclosure, the Broadcast TWT Parameter Set field may also be called Restricted-TWT Parameter Set; for example, when the value of the Broadcast TWT Recommendation field of the Broadcast TWT Parameter Set field is 4.

In addition, in the embodiments of the present disclosure, a broadcast TWT element containing only the Restricted-TWT Parameter Set is also referred to as a Restricted-TWT element. That is, a broadcast form of TWT element is also referred to as a Restricted-TWT element.

The embodiments of the present disclosure provide a communication method, which may be applied to an AP MLD, and the method may include the following steps:
determining a first frame, where the first frame includes a first identification, the first identification indicates the link to which the Broadcast Target Wake Time (TWT) Parameter Set field in the first frame is applied, and the link includes one or more links between the AP MLD and a non-Access Point Multi-Link Device (non-AP MLD); and
sending the first frame, where the first identification is carried in the Broadcast TWT Parameter Set field.

The i-th bit of the first identification is set to a first parameter value, indicating that the link to which the Broadcast TWT Parameter Set field is applied includes the link corresponding to the i-th bit.

The i-th bit of the first identification is set to a second parameter value, indicating that the link to which the Broadcast TWT Parameter Set field is applied does not include the link corresponding to the i-th bit.

Referring to Table 1 above, the first identification is carried in the Broadcast TWT Parameter Set field. For example, a subfield is added to the Broadcast TWT Parameter Set to carry the first identification bit. As a third example, when the first identification bit is Link ID Bitmap, reference is made to Table 2:

**Table 2**

| Info Content | Request Type | Target Wake Time | Nominal Minimum TWT Wake Duration | TWT Wake Interval Mantissa | Broadcast TWT Info | Restricted-TWT Traffic Info | Link ID Bitmap |
|---|---|---|---|---|---|---|---|
| Octets | 2 | 2 | 1 | 2 | 2 | 1 | 0 or 2 |

Each bit of the first identification may correspond to a link. The i-th bit of the first identification is set to the first parameter value. For example, the first parameter value is 1, indicating that the link to which the Broadcast TWT Parameter Set field is applied includes the link corresponding to the i-th bit.

The i-th bit of the first identification is set to the second parameter value. For example, the second parameter value is 0, indicating that the link to which the Broadcast TWT Parameter Set field is applied does not include the link corresponding to the i-th bit.

The embodiments of the present disclosure provide a communication method, which may be applied to an AP MLD, and the method may include the following steps:
determining a first frame, where the first frame includes a first identification, the first identification indicates the link to which the Broadcast TWT Parameter Set field in the first frame is applied, and the link includes one or more links between the AP MLD and a non-Access Point Multi-Link Device (non-AP MLD); and
sending the first frame, where the Broadcast TWT Parameter Set field includes a second identification, and the second identification indicates whether the link includes a plurality of links between the AP MLD and the non-AP MLD.

A second identification is added to the Broadcast TWT Parameter Set field, and the second identification is used to indicate whether the link includes a plurality of links between the AP MLD and the non-AP MLD. For example, as a fourth example, reference is made to the following Table 3, where a second identification is added to the Request Type field of the Broadcast TWT Parameter Set field, and the second identification is, for example, a Multi-link identification bit:

**Table 3**

| Info Content | TWT Request | TWT Setup Command | Trigger | Last Broadcast Parameter Set | Flow Type | Broadcast TWT Recommendation | TWT Wake Interval Exponent | Multi-link identifi -cation bit |
|---|---|---|---|---|---|---|---|---|
| Bits | 1 | 3 | 1 | 1 | 1 | 1 | | 0 or 2 |

For example, when the Multi-link identification bit is 1, the link includes a plurality of links between the AP MLD and the non-AP MLD. When the Multi-link identification bit is 0, the link does not include a plurality of links between the AP MLD and the non-AP MLD, for example, only including a single link for sending the first frame.

The embodiments of the present disclosure provide a communication method, which may be for example applied to an AP MLD. The method may include the following steps:
determining a first frame, where the first frame includes a Broadcast TWT Parameter Set field, a second identification, and a TWT element, the second identification indicates whether the link to which the Broadcast TWT Parameter Set field is applied includes a plurality of links between the AP MLD and a non-Access Point Multi-Link Device (non-AP MLD), the TWT information element includes a third identification, and the third identification is, for example, the Link ID Bitmap Present bit in the Control field of the TWT element; and
sending the first frame.

If the third identification is set to a third parameter value and the second identification bit is a fourth parameter value, the first frame includes the first identification. The first identification indicates the link to which the Broadcast TWT Parameter Set field in the first frame is applied. The link includes one or more links between the AP MLD and the non-AP MLD.

For example, if the third parameter value is 1 and the fourth parameter value is 1, that is, the Link ID Bitmap Present (third identification) bit is 1 and the Multi-link identification bit (second identification) is 1, then the Broadcast TWT Parameter Set field includes the first identification.

The embodiments of the present disclosure provide a communication method, which may be for example applied to an AP MLD. The method may include the following steps:
determining a first frame, where the first frame includes a first identification, the first identification indicates the link to which the Broadcast TWT Parameter Set field in the first frame is applied, and the link includes one or more links between the AP MLD and a non-Access Point Multi-Link Device (non-AP MLD); and
sending the first frame.

The first frame includes a TWT element, the TWT element includes a plurality of Broadcast TWT Parameter Set fields, and the control field of the TWT element includes a fourth identification. When an AP subordinate to the AP MLD sends the first frame containing a TWT element (or R-TWT element) to a STA subordinate to the non-AP MLD associated therewith on a single link, the TWT element contains a plurality of R-TWT parameter Set fields: the control field of each TWT element includes a fourth identification, and the fourth identification is used for example for Link ID Bitmap Present and indicates the link to which the TWT element is applied, including the following Cases 1 to 3.

### Case 1:

The fourth identification is set to a fifth parameter value, and the link to which the plurality of Broadcast TWT Parameter Set fields includes the link for sending the first frame.

For example, the fifth parameter value is set to 0. That is, when the Link ID Bitmap Present bit (fourth identification) in the Control field of the TWT element is set to 0, all the R-TWT parameter Set fields in the R-TWT element are only applied to the link for sending the first frame.

### Case 2:

If the fourth identification is set to a sixth parameter value, and the second identification is set to a seventh parameter value, then the link to which the Broadcast TWT Parameter Set field is applied includes the link for sending the first frame.

For example, the sixth parameter value is set to 1 and the seventh parameter is set to 0. That is, when the Link ID Bitmap Present bit (fourth identification) in the Control field of the TWT element is set to 1 and the Multi-link identification bit (second identification) in the Request Type field is set to 0, the corresponding R-TWT parameter Set field in the R-TWT element is only applied to the link for sending the first frame.

### Case 3:

If the fourth identification is set to an eighth parameter value and the second identification is set to a ninth parameter value, the link to which the Broadcast TWT Parameter Set field is applied includes the link where the first identification is set to a tenth parameter value.

For example, the eighth parameter value is set to 1, the ninth parameter is set to 1, and the tenth parameter is set to 1. When the Link ID Bitmap Present bit (fourth identification) in the Control field of the TWT element is set to 1 and the Multi-link identification bit (second identification) in the Request Type field is set to 1, all the R-TWT Parameter Set fields in the TWT element are applied to the link where the first identification bit is set to 1.

In the embodiments of the present disclosure, the AP MLD determines and sends a first frame, carries a first identification bit in the first frame, and indicates the link to which the Broadcast TWT Parameter Set field in the first frame is applied through the first identification. Besides, the link includes one or more links between the AP MLD and the non-AP MLD, so as to realize the TWT negotiation mechanism under multiple links, improve the spectrum utilization efficiency, and reduce the energy consumption of the terminal device. The existing R-TWT schedule can be applied to other links, so as to avoid other links from negotiating to establish a new R-TWT schedule when transmitting low-latency services and causing a delay in the transmission of low-latency services.

Referring to FIG. 4, the embodiments of the present disclosure provide a communication method, which may be applied to a non-Access Point Multi-Link Device (non-AP MLD). The method may include the following step 401.

In step 401, a first frame is received. The first frame includes a first identification, and the first identification indicates the link to which the Broadcast TWT Parameter Set field in the first frame is applied. The link includes one or more links between an Access Point Multi-Link Device (AP MLD) and the non-AP MLD.

The architecture of the WLAN to which the communication method provided in the embodiments of the present disclosure is applied refers to the aforementioned first example, which will not be repeated here.

TWT is a technology for energy saving, which aims to further reduce the power consumption of Wi-Fi networks. Specifically, the TWT technology determines the sleep and wake time and frequency of STA by enabling STA and AP to negotiate the Service Period (SP). STA remains active and communicates during the Service Period, so that it can sleep outside the Service Period to achieve the purpose of energy saving. In addition, the TWT technology can also enable AP to provide higher quality services to multiple STAs, minimize competition or overlap, and improve spectrum efficiency while reducing the power consumption of Wi-Fi networks.

In order to further ensure the communication of low-latency services, a Restricted-Target Wake Time (R-TWT) is proposed based on the TWT technology. R-TWT is used to serve low-latency services. In the R-TWT SP, other non-low-latency services cannot communicate during such period, thereby ensuring the transmission of low-latency services.

In the embodiments of the present disclosure, the non-AP MLD receives a first frame. In an example, the first frame includes at least one of a Beacon frame, a Probe Response frame, and an Association Response frame. The non-AP MLD acquires the Broadcast TWT Parameter Set field carried in the first frame. As a second example, the format of the Broadcast TWT Parameter Set field is as shown in the aforementioned Table 1, and the Broadcast TWT Parameter Set field includes Request type, Target Wake Time, Restricted TWT Traffic information, and the like.

The non-AP MLD also acquires the first identification in the first frame. The first identification indicates the link to which the Broadcast TWT Parameter Set field is applied. The link includes one or more links between the AP MLD and the non-AP MLD. For example, a Link ID Bitmap subfield may be added to the first frame, and the Link ID Bitmap subfield carries the first identification. The i-th bit in the Link ID Bitmap ID subfield is set to 1, indicating that the link to which the R-TWT parameter Set parameter is applied includes the link associated with the i-th bit. In this way, the first identification can indicate whether one or more links between the AP MLD and the non-AP MLD are applicable to the parameters in the Broadcast TWT Parameter Set field.

The non-AP MLD receives the first frame, so that the R-TWT schedule corresponding to the Broadcast TWT Parameter Set field can be applied to one or more links with the non-AP MLD. Specifically, the AP MLD is used as one or more R-TWT schedules between the schedule AP and the non-AP MLD and only established on the single link between the two. Therefore, the one or more R-TWT schedules are only used for low-latency services on the single link, and cannot be applied to other links between the same AP MLD and non-AP MLD. Thus, if there are low-latency services on other links, it is necessary to negotiate and establish a new R-TWT schedule on the link, resulting in a delay in the transmission of low-latency services and occupying network resources. In the embodiments of the present disclosure, the first identification bit is carried in the first frame so as to apply the existing R-TWT schedule to other links, avoiding the need for other links to negotiate and establish a new R-TWT schedule when transmitting low-latency services.

The embodiments of the present disclosure provide a communication method, which may be for example applied to a non-Access Point Multi-Link Device (non-AP MLD). The method may include the following step:
receiving a first frame.

The first frame includes a first identification, and the first identification indicates the link to which the Broadcast TWT Parameter Set field in the first frame is applied. The link includes one or more links between an Access Point Multi-Link Device (AP MLD) and the non-AP MLD.

The first identification is carried in the Broadcast TWT Parameter Set field.

The i-th bit of the first identification is set to the first parameter value, indicating that the link to which the Broadcast TWT Parameter Set field is applied includes the link corresponding to the i-th bit.

The i-th bit of the first identification is set to the second parameter value, indicating that the link to which the Broadcast TWT Parameter Set field is applied does not include the link corresponding to the i-th bit.

Referring to the above Table 1, the first identification is carried in the Broadcast TWT Parameter Set field. For example, a subfield is added to the Broadcast TWT Parameter Set to carry the first identification bit. As a third example, when the first identification bit is Link ID Bitmap, referring to the above Table 2, each bit of the first identification may correspond to a link. The i-th bit of the first identification is set to the first parameter value. For example, the first parameter value is 1, indicating that the link to which the Broadcast TWT Parameter Set field is applied includes the link corresponding to the i-th bit.

The i-th bit of the first identification is set to the second parameter value. For example, the second parameter value is 0, indicating that the link to which the Broadcast TWT Parameter Set field is applied does not include the link corresponding to the i-th bit.

The embodiments of the present disclosure provide a communication method, which may be for example applied to a non-Access Point Multi-Link Device (non-AP MLD). The method may include the following step:
receiving a first frame.

The first frame includes a first identification, and the first identification indicates the link to which the Broadcast TWT Parameter Set field in the first frame is applied. The link includes one or more links between an Access Point Multi-Link Device (AP MLD) and the non-AP MLD.

The Broadcast TWT Parameter Set field includes a second identification, and the second identification indicates that the link includes a plurality of links between the AP MLD and the non-AP MLD.

A second identification is added to the Broadcast TWT Parameter Set field, and the second identification is used to indicate whether the link includes a plurality of links between the AP MLD and the non-AP MLD. For example, as a fourth example, referring to the aforementioned Table 3, the second identification is added to the Request Type field of the Broadcast TWT Parameter Set field, and the second identification is, for example, a Multi-link identification bit. For example, when the Multi-link identification bit is 1, the link includes a plurality of links between the AP MLD and the non-AP MLD. When the Multi-link identification bit is 0, the link does not include the plurality of links between the AP MLD and the non-AP MLD, for example, only including a single link for sending the first frame.

The embodiments of the present disclosure provide a communication method, which may be for example applied to a non-Access Point Multi-Link Device (non-AP MLD). The method may include the following step:
receiving a first frame.

The first frame includes a Broadcast TWT Parameter Set field, a second identification, and a TWT element. The second identification indicates whether the link to which the Broadcast TWT Parameter Set field is applied includes a plurality of links between the AP MLD and the non-AP MLD. The TWT element includes a third identification. The third identification is, for example, the Link ID Bitmap Present bit in the Control field of the TWT element.

If the third identification is set to the third parameter value and the second identification bit is the fourth parameter value, the first frame includes the first identification. The first identification indicates the link to which the Broadcast TWT Parameter Set field in the first frame is applied, and the link includes one or more links between the AP MLD and the non-AP MLD.

For example, the third parameter value is 1 and the fourth parameter value is 1. That is, the Link ID Bitmap Present (third identification) bit is 1 and the Multi-link identification bit (second identification) is 1, then the Broadcast TWT Parameter Set field includes the first identification.

The embodiments of the present disclosure provide a communication method, which may be for example applied to a non-Access Point Multi-Link Device (non-AP MLD). The method may include the following step:
receiving a first frame.

The first frame includes a first identification, and the first identification indicates the link to which the Broadcast TWT Parameter Set field in the first frame is applied. The link includes one or more links between an Access Point Multi-Link Device (AP MLD) and the non-AP MLD.

The first frame includes a TWT element, the TWT element includes a plurality of Broadcast TWT Parameter Set fields, and the control field of the TWT element includes a fourth identification. When an AP subordinate to the AP MLD sends a first frame containing a TWT element (or an R-TWT element) to a STA subordinate to the non-AP MLD associated therewith on a single link, the TWT element includes a plurality of R-TWT Parameter Set fields: the control field of each TWT element includes a fourth identification, and the fourth identification is used, for example, for Link ID Bitmap Present and indicates the link to which the TWT element is applied, including the following Cases 1 to 3.

### Case 1:

The fourth identification is set to the fifth parameter value, and the link to which the plurality of Broadcast TWT Parameter Set fields is applied includes the link for sending the first frame.

For example, the fifth parameter value is set to 0. That is, when the Link ID Bitmap Present bit (fourth identification) in the Control field of the TWT element is set to 0, all the R-TWT Parameter Set fields in the R-TWT element are only applied to the link for sending the first frame.

### Case 2:

If the fourth identification is set to the sixth parameter value, and the second identification is set to the seventh parameter value, then the link to which the Broadcast TWT Parameter Set field is applied includes the link for sending the first frame.

For example, the sixth parameter value is set to 1, and the seventh parameter is set to 0. That is, when the Link ID Bitmap Present bit (fourth identification) in the Control field of the TWT element is set to 1, and the Multi-link identification bit (second identification) in the Request Type field is set to 0, the corresponding R-TWT parameter Set field in the R-TWT element is only applied to the link for sending the first frame.

### Case 3:

If the fourth identification is set to the eighth parameter value and the second identification is set to the ninth parameter value, the link to which the Broadcast TWT Parameter Set field is applied includes the link where the first identification is set to the tenth parameter value.

For example, the eighth parameter value is set to 1, the ninth parameter is set to 1, and the tenth parameter is set to 1. When the Link ID Bitmap Present bit (fourth identification) in the Control field of the TWT element is set to 1, and the Multi-link identification bit (second identification) in the Request Type field is set to 1, all the R-TWT Parameter Set fields in the TWT element are applied to the link where the first identification bit is set to 1.

In the embodiments of the present disclosure, the non-AP MLD receives a first frame, acquires a first identification bit carried in the first frame, and determines a link to which the Broadcast TWT Parameter Set field in the first frame is applied through the first identification. The link includes one or more links between the AP MLD and the non-AP MLD, thereby implementing a TWT negotiation mechanism under multiple links, improving spectrum utilization efficiency, and reducing energy consumption of terminal devices. The existing R-TWT schedule can be applied to other links, so as to avoid the need for other links to negotiate and establish a new R-TWT schedule when transmitting low-latency services and thereby cause a delay in the transmission of low-latency services.

Referring to Fig. 5, based on the same principle as the method provided by the embodiments of the present disclosure, the embodiments of the present disclosure further provide an electronic device. The electronic device is an Access Point Multi-Link Device (AP MLD), and the electronic device includes a determining module 501 and a sending module 502.

The determining module 501 is configured to determine a first frame. The first frame includes a first identification, and the first identification indicates the link to which the Broadcast TWT Parameter Set field in the first frame is applied. The link includes one or more links between the AP MLD and a non-Access Point Multi-Link Device (non-AP MLD).

The sending module 502 is configured to send the first frame.

For example, in an embodiment of the present disclosure, the first identification is carried in the Broadcast TWT Parameter Set field.

The i-th bit of the first identification is set to the first parameter value, indicating that the link to which the Broadcast TWT Parameter Set field is applied includes the link corresponding to the i-th bit.

The i-th bit of the first identification is set to the second parameter value, indicating that the link to which the Broadcast TWT Parameter Set field is applied does not include the link corresponding to the i-th bit.

For example, in an embodiment of the present disclosure, the Broadcast TWT Parameter Set field includes a second identification, and the second identification indicates whether the link includes a plurality of links between the AP MLD and the non-AP MLD.

For example, in an embodiment of the present disclosure, the first frame includes a TWT element, and the TWT element includes a third identification.

If the third identification is set to the third parameter value and the second identification is set to the fourth parameter value, the Broadcast TWT Parameter Set field includes the first identification.

For example, in an embodiment of the present disclosure, the first frame includes a TWT element, the TWT element includes a plurality of Broadcast TWT Parameter Set fields, and the control field of the TWT element includes a fourth identification.

The fourth identification is set to the fifth parameter value, and the link to which the plurality of Broadcast TWT Parameter Set fields applied includes a link for sending the first frame.

The fourth identification is set to the sixth parameter value, the second identification is set to the seventh parameter value, and the link to which the Broadcast TWT Parameter Set field is applied includes a link for sending the first frame.

The fourth identification is set to the eighth parameter value, the second identification is set to the ninth parameter value, and the link to which the Broadcast TWT Parameter Set field is applied includes a link where the first identification is set to the tenth parameter value.

For example, in an embodiment of the present disclosure, the first frame includes at least one of a Beacon frame, a Probe Response frame, and an Association Response frame.

The embodiments of the present disclosure further provide a communication apparatus, which is applied to an Access Point Multi-Link Device (AP MLD). The communication apparatus includes a frame determining module and a frame sending module.

The frame determining module is configured to determine a first frame. The first frame includes a first identification, and the first identification indicates the link to which the Broadcast TWT Parameter Set field in the first frame is applied. The link includes one or more links between the AP MLD and a non-Access Point Multi-Link Device (non-AP MLD).

The frame sending module is configured to send the first frame.

The communication apparatus further includes other modules of the electronic device in the aforementioned embodiment(s), which are not repeated here.

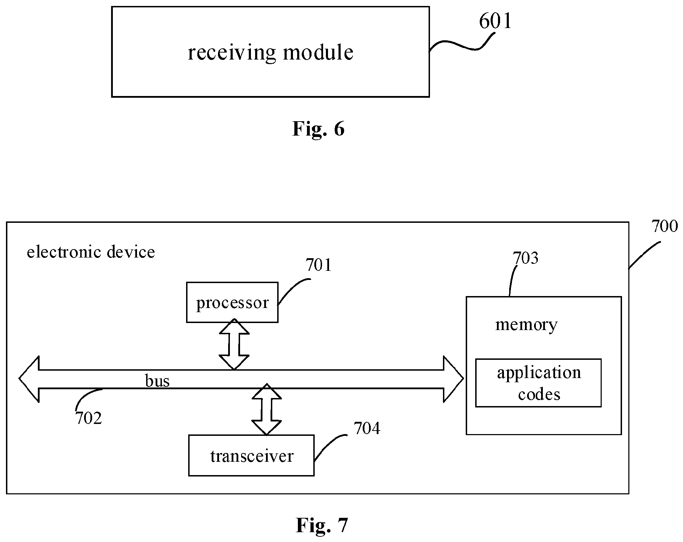

Referring to FIG. 6, based on the same principle as the method provided by the embodiments of the present disclosure, the embodiments of the present disclosure further provide an electronic device, which is an Access Point Multi-Link Device (AP MLD). The electronic device includes a receiving module 601.

The receiving module 601 is configured to receive a first frame. The first frame includes a first identification, and the first identification indicates the link to which the Broadcast TWT Parameter Set field in the first frame is applied. The link includes one or more links between the AP MLD and a non-Access Point Multi-Link Device (non-AP MLD).

For example, in an embodiment of the present disclosure, the first identification is carried in the Broadcast TWT Parameter Set field.

The i-th bit of the first identification is set to the first parameter value, indicating that the link to which the Broadcast TWT Parameter Set field is applied includes the link corresponding to the i-th bit.

The i-th bit of the first identification is set to the second parameter value, indicating that the link to which the Broadcast TWT Parameter Set field is applied does not include the link corresponding to the i-th bit.

For example, in an embodiment of the present disclosure, the Broadcast TWT Parameter Set field includes a second identification, and the second identification indicates that the link includes a plurality of links between the AP MLD and the non-AP MLD.

For example, in an embodiment of the present disclosure, the first frame includes a TWT element, and the TWT element includes a third identification.

If the third identification is set to the third parameter value and the second identification is set to the fourth parameter value, the Broadcast TWT Parameter Set field includes the first identification.

For example, in an embodiment of the present disclosure, the first frame includes a TWT element, the TWT element includes a plurality of Broadcast TWT Parameter Set fields, and the control field of the TWT element includes a fourth identification.

The fourth identification is set to the fifth parameter value, and the link to which the plurality of Broadcast TWT Parameter Set fields is applied includes the link for sending the first frame.

The fourth identification is set to the sixth parameter value, the second identification is set to the seventh parameter value, and the link to which the Broadcast TWT Parameter Set field is applied includes the link for sending the first frame.

The fourth identification is set to the eighth parameter value, the second identification is set to the ninth parameter value, and the link to which the Broadcast TWT Parameter Set field is applied includes the link where the first identification is set to the tenth parameter value.

The embodiments of the present disclosure further provide a communication apparatus, which is applied to an Access Point Multi-Link Device (AP MLD). The communication apparatus includes a frame receiving module.

The frame receiving module is configured to receive a first frame. The first frame includes a first identification, and the first identification indicates the link to which the Broadcast TWT Parameter Set field in the first frame is applied. The link includes one or more links between the AP MLD and a non-Access Point Multi-Link Device (non-AP MLD).

The communication apparatus further includes other modules of the electronic device in the aforementioned embodiment(s), which are not repeated here.

In an example embodiment, the embodiments of the present disclosure further provide an electronic device, as shown in Fig. 7. The electronic device 700 shown in Fig. 7 may be a server, including: a processor 701 and a memory 703. The processor 701 and the memory 703 are connected, such as through a bus 702. For example, the electronic device 700 may also include a transceiver 704. It should be noted that in actual applications, the transceiver 704 is not limited to one, and the structure of the electronic device 700 does not constitute any limitation on the embodiments of the present disclosure.

The processor 701 may be a Central Processing Unit (CPU), a general-purpose processor, a Digital Signal Processor (DSP), an Application Specific Integrated Circuit (ASIC), a Field Programmable Gate Array (FPGA), or other programmable logic devices, transistor logic devices, hardware components, or any combination thereof. The processor 701 may implement or execute various example logic blocks, modules, and circuits described in conjunction with the content of the present disclosure. The processor 701 may also be a combination that implements computing functions, such as a combination of one or more microprocessors, a combination of DSP and microprocessors, etc.

The bus 702 may include a path to transmit information between the above components. The bus 702 may be a Peripheral Component Interconnect (PCI) bus or an Extended Industry Standard Architecture (EISA) bus, etc. The bus 702 may be classified into an address bus, a data bus, a control bus, etc. For the ease of representation, only one thick line is used in Fig. 7, but it does not mean that there is only one bus or one type of bus.

The memory 703 may be a Read Only Memory (ROM) or other types of static storage devices that can store static information and instructions, a Random Access Memory (RAM) or other types of dynamic storage devices that can store information and instructions, or an Electrically Erasable Programmable Read Only Memory (EEPROM), a Compact Disc-Read Only Memory (CD-ROM) or other optical disk storage, optical disc storage (including compressed optical disc, laser disc, optical disc, digital versatile disc, Blu-ray disc, etc.), a disk storage medium or other magnetic storage device, or any other medium that can be used to carry or store the desired program codes in the form of instructions or data structures and can be accessed by a computer, but is not limited thereto.

The memory 703 is used to store the application codes for executing the solution of the present disclosure, and is controlled by the processor 701 for execution. The processor 701 is used to execute the application codes stored in the memory 703 to implement the content shown in the aforementioned method embodiment(s).

The electronic devices include, but are not limited to, mobile terminals like mobile phones, laptops, digital broadcast receivers, personal digital assistants (PDAs), tablet computers (PADs), portable multimedia players (PMPs), vehicle-mounted terminals (such as vehicle-mounted navigation terminals), etc., and fixed terminals such as digital TVs, desktop computers, etc. The electronic device shown in Fig. 7 is only an example, and should not impose any restrictions on the functions and scope of use of the embodiments of the present disclosure.

The server provided by the present disclosure may be an independent physical server, or a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smart phone, a tablet computer, a laptop computer, a desktop computer, a smart speaker, a smart watch, etc., but is not limited thereto. The terminal and the server may be directly or indirectly connected via wired or wireless communication, which is not limited in the present disclosure.

The embodiments of the present disclosure provide a computer-readable storage medium, on which a computer program is stored. When the computer program is run on a computer, the computer can execute the corresponding content in the aforementioned method embodiment(s).

It should be understood that, although the steps in the flow chart of the accompanying drawings are shown in sequence as indicated by the arrows, these steps are not necessarily executed in sequence in the order indicated by the arrows. Unless otherwise specified herein, there is no strict restriction on the execution order of these steps, and they can be executed in other orders. Moreover, at least some of the steps in the flow chart of the accompanying drawings may include multiple sub-steps or multiple stages, and these sub-steps or stages are not necessarily executed at the same time, but can be executed at different times, and their execution order is not necessarily sequential, but can be executed in turn or alternately with other steps or at least sone of the sub-steps or stages of other steps.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus, or device, or any combination of the above. More specific examples of computer-readable storage media may include, but are not limited to: an electrical link with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus, or device. In the present disclosure, a computer-readable signal medium may include a data signal propagated in a baseband or as part of a carrier wave, which carries computer-readable program codes. This propagated data signal may take a variety of forms, including, but not limited to, an electromagnetic signal, an optical signal, or any suitable combination of the above. The computer-readable signal medium may also be any computer-readable medium other than a computer-readable storage medium, which may send, propagate, or transmit a program for use by or in combination with an instruction execution system, apparatus, or device. The program codes contained on the computer-readable medium may be transmitted by any appropriate medium, including, but not limited to: wires, optical cables, radio frequency (RF), etc., or any suitable combination of the above.

The above-mentioned computer-readable medium may be contained in the above-mentioned electronic device; or may exist alone without being assembled into the electronic device.

The above-mentioned computer-readable medium carries one or more programs. When the one or more programs as mentioned above are executed by the electronic device, the electronic device performs the method shown in the above-mentioned embodiment(s).

According to an aspect of the present disclosure, a computer program product or computer program is provided. The computer program product or computer program includes computer instructions, which are stored in a computer-readable storage medium. The processor of the computer device reads the computer instructions from the computer-readable storage medium, and the processor executes the computer instructions, so that the computer device performs the methods provided in various example implementations as mentioned above.

The computer program codes for performing the operations of the present disclosure may be written in one or more programming languages or a combination thereof, including object-oriented programming languages such as Java, Smalltalk, C++, and conventional procedural programming languages such as "C" or similar programming languages. The program codes may be executed entirely on the user's computer, partially on the user's computer, as a separate software package, partially on the user's computer and partially on a remote computer, or entirely on a remote computer or server. In the case of a remote computer, the remote computer may be connected to the user's computer through any type of network, including a local area network (LAN) or a wide area network (WAN), or may be connected to an external computer (e.g., through the Internet using an Internet service provider).

The flow charts and block diagrams in the accompanying drawings illustrate the possible architecture, functions, and operations of the systems, methods, and computer program products according to various embodiments of the present disclosure. In this regard, each box in the flow chart or block diagram may represent a module, a program segment, or a portion of codes, which contains one or more executable instructions for implementing a specified logical function. It should also be noted that in some alternative implementations, the functions marked in the boxes may also occur in a different order than that marked in the drawings. For example, two boxes represented in succession may actually be executed substantially in parallel, and they may sometimes be executed in the opposite order, depending on the functions involved. It should also be noted that each box in the block diagram and/or flow chart, and the combination of boxes in the block diagram and/or flow chart, may be implemented by a dedicated hardware-based system that performs the specified function or operation, or may be implemented by a combination of dedicated hardware and computer instructions.

The modules involved in the embodiments described by the present disclosure may be implemented by software or by hardware. The name of the module does not constitute any limitation on the module itself in some cases. For example, module A may also be described as "module A for performing operation B".

The above description is only preferred embodiments of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features, without departing from the above disclosure concept. For example, the above-mentioned features may be replaced by technical features with similar functions disclosed in the present disclosure (but not limited to) to form a technical solution.

## Claims

1. A communication method, applied to an Access Point Multi-Link Device (AP MLD), the method comprising:
determining a first frame, wherein the first frame comprises a first identification, the first identification indicates a link to which a Broadcast Target Wake Time (TWT) Parameter Set field in the first frame is applied, and the link comprises one or more links between the AP MLD and a non-Access Point Multi-Link Device (non-AP MLD); and
sending the first frame.

2. The communication method according to claim 1, wherein
the first identification is carried in the Broadcast TWT Parameter Set field;
an i-th bit of the first identification is set to a first parameter value, indicating that the link to which the Broadcast TWT Parameter Set field is applied comprises a link corresponding to the i-th bit;
the i-th bit of the first identification is set to a second parameter value, indicating that the link to which the Broadcast TWT Parameter Set field is applied does not comprise the link corresponding to the i-th bit.

3. The communication method according to claim 1, wherein
the Broadcast TWT Parameter Set field comprises a second identification, and the second identification indicates whether the link comprises a plurality of links between the AP MLD and the non-AP MLD.

4. The communication method according to claim 3, wherein
the first frame comprises a TWT element, and the TWT element comprises a third identification;
in a case that the third identification is set to a third parameter value and the second identification is set to a fourth parameter value, the Broadcast TWT Parameter Set field comprises the first identification.

5. The communication method according to claim 3 or 4, wherein
the first frame comprises a TWT element, the TWT element comprises a plurality of Broadcast TWT Parameter Set fields, and a control field of the TWT element comprises a fourth identification;
the fourth identification is set to a fifth parameter value, and the link to which the plurality of Broadcast TWT Parameter Set fields is applied comprises a link for sending the first frame;
the fourth identification is set to a sixth parameter value, the second identification is set to a seventh parameter value, and the link to which the Broadcast TWT Parameter Set field is applied comprises the link for sending the first frame;
the fourth identification is set to an eighth parameter value, the second identification is set to a ninth parameter value, and the link to which the Broadcast TWT Parameter Set field is applied comprises a link where the first identification is set to a tenth parameter value.

6. The communication method according to claim 5, wherein
the first frame comprises at least one of a Beacon frame, a Probe Response frame, and an Association Response frame.

7. A communication method, applied to a non-Access Point Multi-Link Device (non-AP MLD), the method comprising:
receiving a first frame, wherein the first frame comprises a first identification, the first identification indicates a link to which a Broadcast Target Wake Time (TWT) Parameter Set field in the first frame is applied, and the link comprises one or more links between an Access Point Multi-Link Device (AP MLD) and the non-AP MLD.

8. The communication method according to claim 7, wherein
the first identification is carried in the Broadcast TWT Parameter Set field;
an i-th bit of the first identification is set to a first parameter value, indicating that the link to which the Broadcast TWT Parameter Set field is applied comprises a link corresponding to the i-th bit;
the i-th bit of the first identification is set to a second parameter value, indicating that the link to which the Broadcast TWT Parameter Set field is applied does not comprise the link corresponding to the i-th bit.

9. The communication method according to claim 7, wherein
the Broadcast TWT Parameter Set field comprises a second identification, and the second identification indicates that the link comprises a plurality of links between the AP MLD and the non-AP MLD.

10. The communication method according to claim 9, wherein
the first frame comprises a TWT element, and the TWT element comprises a third identification;
in a case that the third identification is set to a third parameter value and the second identification is set to a fourth parameter value, the Broadcast TWT Parameter Set field comprises the first identification.

11. The communication method according to claim 9 or 10, wherein
the first frame comprises a TWT element, the TWT element comprises a plurality of Broadcast TWT Parameter Set fields, and a control field of the TWT element comprises a fourth identification;
the fourth identification is set to a fifth parameter value, and the link to which the plurality of Broadcast TWT Parameter Set fields is applied comprises a link for sending the first frame;
the fourth identification is set to a sixth parameter value, the second identification is set to a seventh parameter value, and the link to which the Broadcast TWT Parameter Set field is applied comprises the link for sending the first frame;
the fourth identification is set to an eighth parameter value, the second identification is set to a ninth parameter value, and the link to which the Broadcast TWT Parameter Set field is applied comprises a link where the first identification is set to a tenth parameter value.

12. The communication method according to claim 11, wherein the first frame comprises at least one of a Beacon frame, a Probe Response frame, and an Association Response frame.

13. An electronic device, wherein the electronic device is an Access Point Multi-Link Device (AP MLD), and comprises:
a determining module, configured to determine a first frame, wherein the first frame comprises a first identification, the first identification indicates a link to which a Broadcast Target Wake Time (TWT) Parameter Set field in the first frame is applied, and the link comprises one or more links between the AP MLD and a non-Access Point Multi-Link Device (non-AP MLD); and
a sending module, configured to send the first frame.

14. An electronic device, wherein the electronic device is a non-Access Point Multi-Link Device (non-AP MLD) and comprises:
a receiving module, configured to receive a first frame, wherein the first frame comprises a first identification, the first identification indicates a link to which a Broadcast Target Wake Time (TWT) Parameter Set field in the first frame is applied, and the link comprises one or more links between an Access Point Multi-Link Device (AP MLD) and the non-AP MLD.

15. An electronic device, comprising a memory, a processor, and a computer program stored in the memory and executable on the processor, wherein the processor is configured to implement the communication method according to any one of claims 1 to 6 or the communication method according to any one of claims 7 to 12 when executing the computer program.

16. A computer-readable storage medium, having a computer program stored thereon, wherein the computer program is configured to implement the communication method according to any one of claims 1 to 6 or the communication method according to any one of claims 7 to 12 when executed by a processor.
